# DEMANDE DE BREVET EUROPEEN

(11) **EP 4 725 765 A1**
(43) Date de publication de la demande: **15.04.2026**
(21) Numéro de dépôt: 25207181.6
(22) Date de dépôt: 07.10.2025
(51) Int. Cl.: B60Q 1/04, F16B 5/02

(54) **SYSTÈME D'ÉCLAIRAGE DE LONGUE ÉTENDUE POUR UN VÉHICULE COMPRENANT UNE PAIRE DE DISPOSITIFS D'ATTACHE RÉGLABLES**

(30) Priorité: 09.10.2024 FR 2410935
(71) Demandeur: Renault s.a.s, 92100 Boulogne Billancourt (FR)
(72) Inventeur: GUENOUX, Francois, 78280 GUYANCOURT (FR); LEONE, Sebastien, 78280 GUYANCOURT (FR); PONNAMBALAM, Anandhakumar, 603002 Kancheepuram (IN); SACHIDHANANDAM, Sri-Ram, 603002 Kancheepuram (IN)

(57) **Abrégé**

Ce système d'éclairage (1) pour un véhicule comprend :
- un cadre de support (2) se prolongeant depuis une extrémité gauche (2a) jusqu'à une extrémité droite (2b), les extrémités (2a, 2b) définissant une étendue (3) du système d'éclairage (1), et
- des modules d'éclairage gauche et droit (4a, 4b) montés sur le cadre de support (2) au niveau des extrémités gauche et droite (2a, 2b) respectivement.

L'étendue (3) du système d'éclairage (1) est au moins égale à 1,2 m et le système d'éclairage (1) est en outre pourvu d'une paire de dispositifs d'attache réglables gauche et droit (5a, 5b) pour attacher le cadre de support (2) à une carrosserie (6) du véhicule avec une compensation automatique de tolérance entre le cadre de support (2) et la carrosserie (6) du véhicule.

## Description

### Domaine de l'art

La présente invention se rapporte à un système d'éclairage pour un véhicule. Plus précisément, la présente invention se rapporte à un système d'éclairage couvrant typiquement toute la largeur d'un véhicule.

### État de l'art

Typiquement, les systèmes d'éclairage de longue étendue couvrent toute la largeur du véhicule qu'ils équipent. En général, leur longueur varie entre 1,2 m et 1,4 m. Cette plage de longueurs combinée aux tolérances de fabrication et de fixation, pose des défis uniques qui nécessitent une compensation des tolérances jusqu'à ± 2,5 mm.

Les compensateurs de tolérance traditionnels, tels que des rondelles et des joints, sont généralement utilisés pour répondre aux exigences de compensation de tolérance susmentionnées.

Toutefois, leur utilisation pour attacher des systèmes d'éclairage de longue étendue s'accompagne d'une augmentation du temps d'assemblage, de problèmes potentiels de désalignement et d'une diminution de la fiabilité dans certaines conditions de contrainte.

### Objet de l'invention

Un objectif de l'invention est de fournir un système d'éclairage de longue étendue pourvu d'un dispositif d'attache avec une compensation automatique de tolérance qui soit fiable et précis.

Selon un mode de réalisation, un système d'éclairage pour un véhicule comprend un cadre de support se prolongeant depuis une extrémité gauche jusqu'à une extrémité droite, les extrémités définissant une étendue du système d'éclairage. Le système comprend en outre des modules d'éclairage gauche et droit montés sur le cadre de support au niveau des extrémités gauche et droite respectivement. L'étendue du système d'éclairage est au moins égale à 1,2 m et couvre typiquement toute la largeur du véhicule. Le système d'éclairage est en outre pourvu d'une paire de dispositifs d'attache réglables gauche et droit pour attacher le cadre de support à une carrosserie du véhicule avec une compensation automatique de tolérance entre le cadre de support et la carrosserie du véhicule.

Une telle configuration permet l'attache avec compensation automatique de tolérance d'un système d'éclairage grande étendue. Le système d'éclairage proposé simplifie le montage tout en permettant un alignement précis avec une fiabilité accrue. En effet, la compensation automatique de tolérance facilite le montage dans les chaînes d'assemblage en aveugle, réduisant le temps d'assemblage et les erreurs potentielles.

Dans un mode de réalisation, chaque dispositif d'attache réglable comprend :
- un élément de réception qui est fixé sur la carrosserie du véhicule,
- un élément de réglage qui est vissé sur l'élément de réception via une première paire de filets dans une première direction de filetage, et
- une vis d'attache, qui peut être vissée dans l'élément de réception via une deuxième paire de filets dans une deuxième direction de filetage opposée, afin de faire tourner également l'élément de réglage lorsque la vis d'attache est tournée et de le faire se déplacer ainsi à des fins de compensation de tolérance en butée avec le cadre de support,
l'élément de réception, l'élément de réglage et la vis d'attache étant coaxiaux le long d'un axe.

Par exemple, l'axe est approximativement horizontal.

Avantageusement, les dispositifs d'attache réglables gauche et droit sont situés au niveau des extrémités gauche et droite respectivement du cadre de support. Cette configuration permet un meilleur support du système d'éclairage.

Avantageusement, chaque dispositif d'attache réglable est disposé au niveau d'un côté inférieur du cadre de support.

De préférence, le cadre de support est en outre pourvu, sur un côté supérieur, de moyens d'attache auxiliaires pour attacher le cadre de support à la carrosserie du véhicule, de sorte qu'une face frontale du cadre de support soit orientée vers l'avant du véhicule et soit orientée vers le bas en formant un angle prédéterminé avec un axe vertical.

Par exemple, l'étendue du système d'éclairage a une valeur comprise entre 1,2 m et 1,4 m.

Selon un autre aspect, l'invention se rapporte à un véhicule comprenant un système d'éclairage tel que décrit ci-dessus.

### Description des dessins

La présente invention et ses avantages seront mieux compris en étudiant la description détaillée d'un mode de réalisation spécifique donné à titre d'exemple non limitatif et illustré par les dessins annexés sur lesquels :
La figure 1 illustre une vue de face d'un système d'éclairage pour un véhicule selon un mode de réalisation de l'invention ;
La figure 2 est une vue auxiliaire partielle du système d'éclairage de la figure 1 montrant une liaison entre un cadre de support et une carrosserie de véhicule ; et
La figure 3 est une vue détaillée d'un dispositif d'attache réglable du système d'éclairage de la figure 1.

### Description détaillée

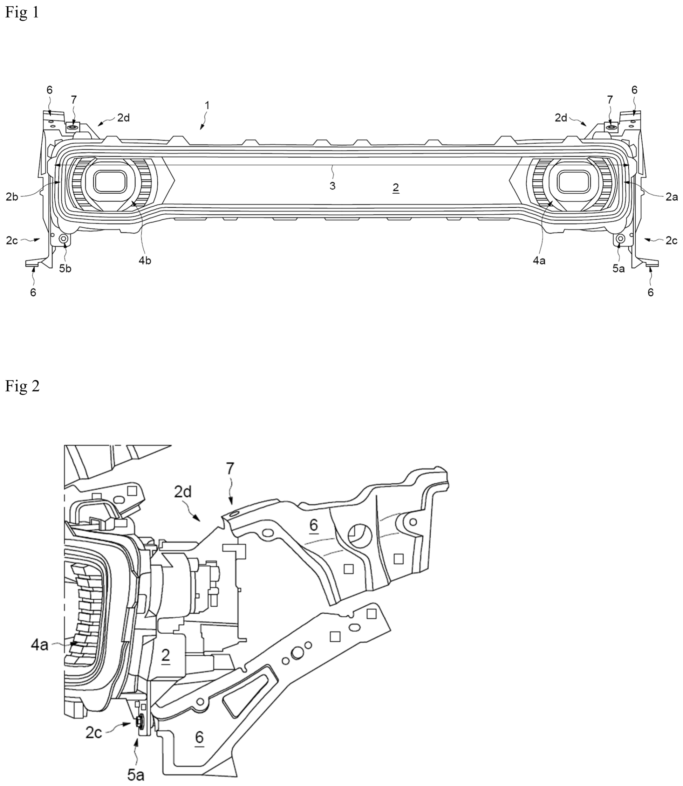

Le système d'éclairage 1 représenté sur la figure 1 comprend un cadre de support 2 se prolongeant depuis une extrémité gauche 2a jusqu'à une extrémité droite 2b. Les extrémités gauche et droite 2a, 2b définissent une étendue 3 du système d'éclairage 1.

Le système d'éclairage 1 est un système d'éclairage de longue étendue qui couvre typiquement toute la largeur d'un véhicule. De ce fait, l'étendue 3 est au moins égale à 1,2 m. De préférence, l'étendue 3 a une valeur comprise entre 1,2 m et 1,4 m.

Le système d'éclairage 1 comprend également des modules d'éclairage gauche et droit 4a, 4b montés sur le cadre de support 2 au niveau des extrémités gauche et droite 2a, 2b respectivement.

Le système d'éclairage 1 est en outre pourvu d'une paire de dispositifs d'attache réglables gauche et droit 5a, 5b pour attacher le cadre de support 2 à une carrosserie 6 d'un véhicule avec une compensation automatique de tolérance entre le cadre de support 2 et la carrosserie 6 du véhicule.

La figure 2 est une vue latérale partielle du système d'éclairage 1 montrant plus en détail l'attache du cadre de support 2 à la carrosserie 6 du véhicule. Il convient de noter que les éléments similaires ou identiques ont les mêmes références dans l'ensemble des figures.

Comme illustré sur la figure 1, les dispositifs d'attache réglables gauche et droit 5a, 5b sont situés au niveau des extrémités gauche et droite 2a, 2b respectivement du cadre de support 2.

De préférence, chaque dispositif d'attache réglable 5a, 5b est disposé au niveau d'un côté inférieur 2c du cadre de support 2.

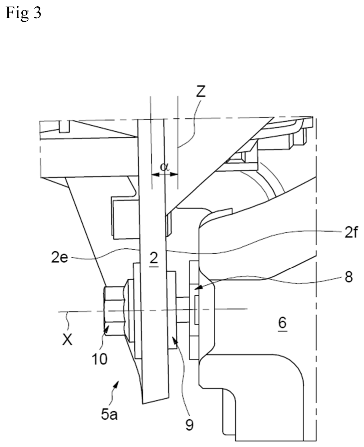

Le cadre de support 2 est en outre pourvu, sur un côté supérieur 2d, de moyens d'attache auxiliaires 7 pour attacher le cadre de support 2 à la carrosserie 6 du véhicule de sorte qu'une face frontale 2e du cadre de support 2 soit orientée vers l'avant du véhicule et soit orientée vers le bas en formant un angle prédéterminé α avec un axe vertical Z (figure 3). Par exemple, l'angle prédéterminé α a une valeur d'au moins 1°.

Chaque dispositif d'attache réglable 5a, 5b comprend un élément de réception 8, un élément de réglage 9 et une vis d'attache 10 qui sont coaxiaux le long d'un axe X. De préférence, l'axe X est approximativement horizontal.

L'élément de réception 8 est fixé sur la carrosserie 6 du véhicule.

L'élément de réglage 9 est vissé sur l'élément de réception 8 via une première paire de filets dans une première direction de filetage.

L'élément de réception 8 et l'élément de réglage 9 forment une unité structurelle pré-installable.

La vis d'attache 10 peut être vissée dans l'élément de réception 8 via une deuxième paire de filets dans une deuxième direction de filetage opposée, afin de faire tourner également l'élément de réglage 9 lorsque la vis d'attache 10 est tournée et de le faire se déplacer ainsi à des fins de compensation de tolérance en butée avec une face arrière 2f du cadre de support 2 tel que montré dans la figure 3.

Bien que la divulgation ait été décrite en relation avec ce qui est actuellement considéré comme des modes de réalisation pratiques, il est entendu que la divulgation n'est pas limitée aux modes de réalisation divulgués, mais, au contraire, est destinée à couvrir diverses modifications et dispositions équivalentes incluses dans l'esprit et la portée des revendications annexées.

## Revendications

1. Système d'éclairage (1) pour un véhicule comprenant :
- un cadre de support (2) se prolongeant depuis une extrémité gauche (2a) jusqu'à une extrémité droite (2b), lesdites extrémités (2a, 2b) définissant une étendue (3) du système d'éclairage (1),
- des modules d'éclairage gauche et droit (4a, 4b) montés sur le cadre de support (2) au niveau desdites extrémités gauche et droite (2a, 2b) respectivement,
**caractérisé en ce que** l'étendue (3) du système d'éclairage (1) est au moins égale à 1,2 m et **en ce que** le système d'éclairage (1) est en outre pourvu d'une paire de dispositifs d'attache réglables gauche et droit (5a, 5b) pour attacher le cadre de support (2) à une carrosserie (6) du véhicule avec une compensation automatique de tolérance entre le cadre de support (2) et la carrosserie (6) du véhicule.

2. Système d'éclairage (1) selon la revendication 1, chaque dispositif d'attache réglable (5a, 5b) comprenant :
- un élément de réception (8) qui est fixé sur la carrosserie (6) du véhicule,
- un élément de réglage (9) qui est vissé sur l'élément de réception (8) via une première paire de filets dans une première direction de filetage, et
- une vis d'attache (10), qui peut être vissée dans l'élément de réception (8) via une deuxième paire de filets dans une deuxième direction de filetage opposée, afin de faire tourner également l'élément de réglage (9) lorsque la vis d'attache (10) est tournée et de le faire se déplacer ainsi à des fins de compensation de tolérance en butée avec le cadre de support (2),
lesdits élément de réception (8), élément de réglage (9) et vis d'attache (10) étant coaxiaux le long d'un axe (X).

3. Système d'éclairage (1) selon la revendication 1, ledit axe (X) étant approximativement horizontal.

4. Système d'éclairage (1) selon l'une quelconque des revendications 1 à 3, lesdits dispositifs d'attache réglables gauche et droit (5a, 5b) étant situés au niveau desdites extrémités gauche et droite (2a, 2b) respectivement du cadre de support (2).

5. Système d'éclairage (1) selon l'une quelconque des revendications 1 à 4, chaque dispositif d'attache réglable (2a, 2b) étant disposé au niveau d'un côté inférieur (2c) du cadre de support (2).

6. Système d'éclairage (1) selon l'une quelconque des revendications 1 à 5, le cadre de support (2) étant en outre pourvu, sur un côté supérieur (2d), de moyens d'attache auxiliaires (7) pour attacher le cadre de support (2) à la carrosserie (6) du véhicule de sorte qu'une face frontale (2e) du cadre de support (2) soit orientée vers l'avant du véhicule et soit orientée vers le bas en formant un angle prédéterminé (α) avec un axe vertical (Z).

7. Système d'éclairage (1) selon la revendication 6, l'angle prédéterminé (α) ayant une valeur d'au moins 1°.

8. Système d'éclairage (1) selon l'une quelconque des revendications 1 à 7, l'étendue du système d'éclairage (1) ayant une valeur comprise entre 1,2 m et 1,4 m.

9. Véhicule comprenant un système d'éclairage (1) selon l'une quelconque des revendications 1 à 8.
